# EUROPEAN PATENT APPLICATION

(11) **EP 2 226 113 A1**
(43) Date of publication of application: **08.09.2010**
(21) Application number: 08868721.5
(22) Date of filing: 24.12.2008
(51) Int. Cl.: B01D 61/36, C10L 1/02

(54) **DEHYDRATING SYSTEM, AND DEHYDRATING METHOD**

(30) Priority: 28.12.2007 JP 2007339132
(71) Applicant: Mitsubishi Heavy Industries, Ltd., Tokyo 108-8215 (JP)
(72) Inventor: TANAKA, Yukio, Hiroshima-shi Hiroshima 733-8553 (JP); OSORA, Hiroyuki, Hiroshima-shi Hiroshima 733-8553 (JP); SEIKI, Yoshio, Hiroshima-shi Hiroshima 733-8553 (JP); YUKUMOTO, Atsuhiro, Hiroshima-shi Hiroshima 733-8553 (JP); HIRAYAMA, Haruaki, Mihara-shi Hiroshima 729-0393 (JP); OGINO, Shinji, Mihara-shi Hiroshima 729-0393 (JP)
(74) Representative: Intes, Didier Gérard André
(86) International application number: PCT/JP2008/073372
(87) International publication number: WO 2009/084521

(57) **Abstract**

Provided are a dehydrating system and a dehydrating method which achieve improvement in a membrane performance. The dehydrating system includes a first preheater (3a); multiple dehydrating apparatuses (1a, 1b and 1c) which are connected in series downstream of the preheater and which are configured to remove water from an organic aqueous solution; and returning means (6) for returning a part of the organic aqueous solution having passed through one or more of the dehydrating apparatuses to the dehydrating apparatuses or the dehydrating apparatus upstream of the dehydrating apparatuses.

## Description

### TECHNICAL FIELD

The present invention relates to a dehydrating system and a dehydrating method. More specifically, the present invention relates to a dehydrating system and a dehydrating method which allow an efficient dehydration of an organic aqueous solution such as a mixture of water with one of ethanol and propanol, each of which forms an azeotropic composition with water, or a mixture of water with an acid.

### BACKGROUND ART

Ethanol has attracted attention as a fuel source alternative to petroleum fuels. The market scale of ethanol is estimated to be 55 million kiloliters in 2010. However, in order to use ethanol as a fuel, the ethanol has to be dehydrated to 99.7 wt% after a crude product obtained from a biomass such as corn is distilled and purified. In conventional dehydration, a dilute ethanol aqueous solution is distilled and concentrated in a distillation tower until the azeotropic point of the ethanol/water system is nearly reached; then, dehydration is performed.

As a technique for the dehydration, there is a dehydration method by azeotropic distillation involving addition of an entrainer. However, the method inevitably includes a step of azeotropic distillation of a three-component system and further a step of recovery of the entrainer. Accordingly, this method has several drawbacks such as requiring enormous thermal energy.

Meanwhile, there is another dehydration method in which multiple molecular sieve tanks are arranged in parallel, and in which dehydration is performed by using these molecular sieve tanks in a switched manner on a batch basis. However, even this method has such a drawback that the regeneration of the molecular sieve tanks consumes enormous energy.

Moreover, a method has been known with which water is removed, by a pervaporation membrane separation using a membrane separator, from a liquid mixture which is completely mutually miscible. Meanwhile, the following method for concentrating a water-soluble organic compound has also been known. In this method, a vapor permeation method and a pervaporation method are combined, multiple separators are arranged in series, and heat is supplied at intermediate stages of the separators, to save thermal energy (refer to Patent Literature 1).
Patent Literature 1: Japanese Patent Application Publication No. 2005-177535

### DISCLOSURE OF THE INVENTION

### PROBLEMS TO BE SOLVED BY THE INVENTION

The pervaporation membrane separation is a promising method for purification of an ethanol fuel or the like. However, to be put into practical use, a pervaporation membrane separation of higher performance is demanded. Particularly, it is demanded that a high purity anhydrous ethanol or the like be obtained at a higher efficiency.

### MEANS FOR SOLVING THE PROBLEMS

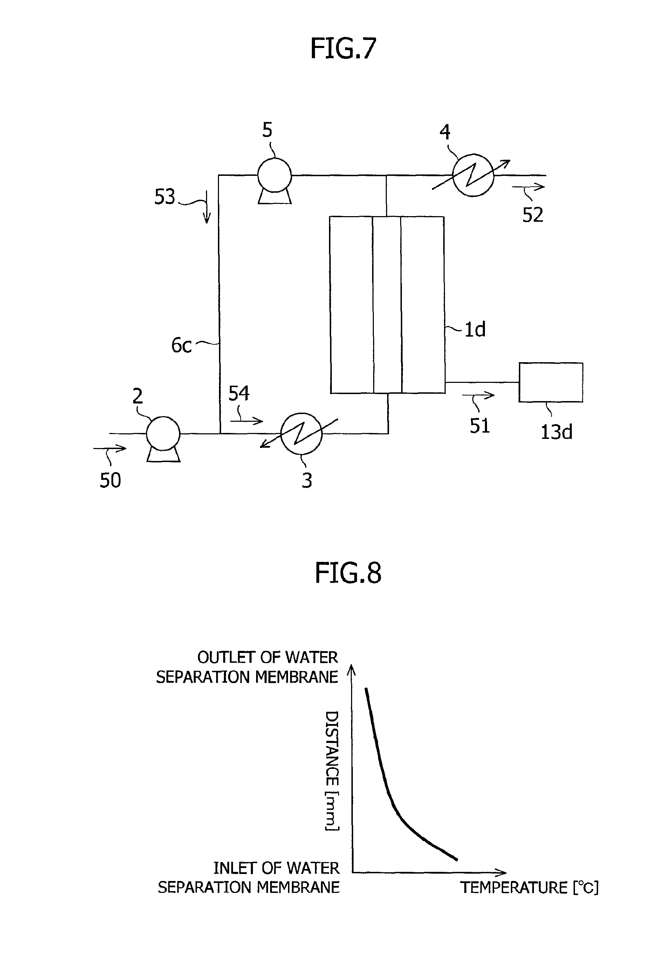

The present inventors have found out that, when a pervaporation membrane separation is performed by using a dehydrating apparatus including a tubular-type or monolithic-type water separation membrane, the temperature of an organic aqueous solution being treated decreases, as the organic aqueous solution moves from an inlet to an outlet of the water separation membrane. This is because the latent heat generated when the organic aqueous solution being treated evaporates while passing through the water separation membrane is taken out from the organic aqueous solution. Fig. 8 shows the relationship between the temperature and the distance from an inlet of a membrane of a water separation membrane reactor. Such decrease in the temperature of an organic aqueous solution leads to decrease in permeation flux (the unit is kg/m²h), which is indicative of the membrane performance of a water separation membrane.

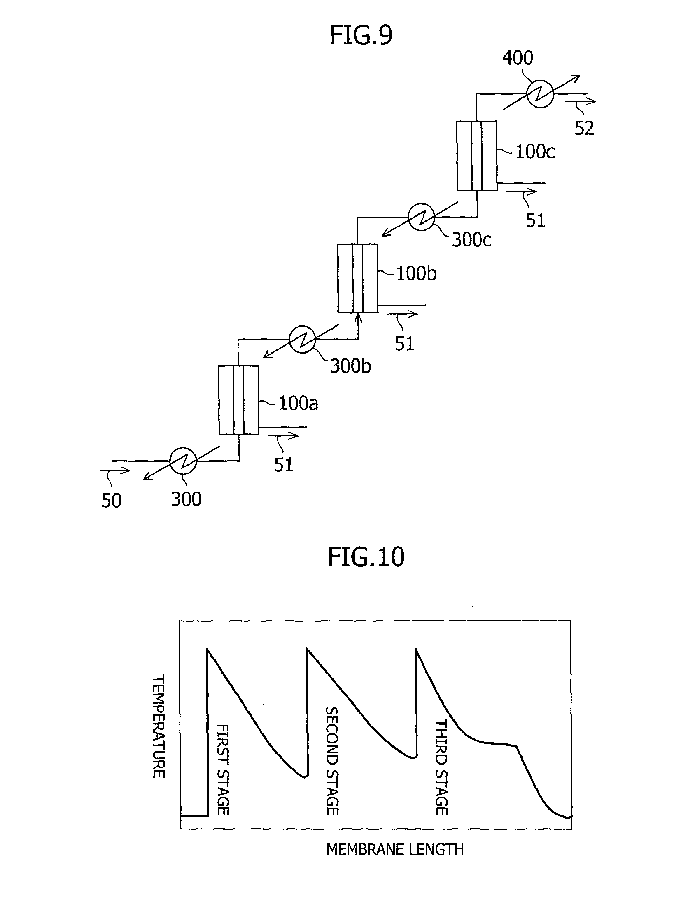

In this connection, the following method is conceivable; specifically, multiple dehydrating apparatuses are connected in series, and a preheater is provided upstream of each of the dehydrating apparatuses to supply heat. Fig. 9 shows a schematic diagram of a dehydrating system in which three stages of dehydrating apparatuses 100a, 100b and 100c are provided, and in which preheaters 300a, 300b and 300c are provided at upstream locations of the dehydrating apparatuses, respectively. In this case, as shown in Fig. 10, the degree of temperature decrease is smaller at the second stage than at the first stage, and is smaller at the third stage than at the second stage.

For practical use of a dehydrating apparatus including a water separation membrane, the present inventors have attempted to build a system which has a higher water separation performance and which consumes less energy, and thus completed the present invention. The present invention is a dehydrating system including: a first preheater; a plurality of dehydrating apparatuses which are connected in series downstream of the preheater and which are configured to remove water from an organic aqueous solution, each of the plurality of dehydrating apparatuses including a water separation membrane portion and a shell portion inside a main body of the dehydrating apparatus, the water separation membrane portion having an inlet for the organic aqueous solution and an outlet for the organic aqueous solution at a lower portion and an upper portion, respectively, of a water separation membrane having one or more vertically extending flow paths which allow the organic aqueous solution to pass therethrough, the shell portion being defined by an outside surface of the water separation membrane portion and an inner wall of the main body of the apparatus, water in the organic aqueous solution permeating through the water separation membrane and moving to the shell portion, as the organic aqueous solution rises in the water separation membrane, to thereby dehydrate the organic aqueous solution; returning means for returning a part of the organic aqueous solution having passed through at least one of the dehydrating apparatuses to any of the at least one dehydrating apparatus and the dehydrating apparatus upstream of the at least one dehydrating apparatus; and a second preheater for preheating the organic aqueous solution returned by the returning means, before the organic aqueous solution is fed to the dehydrating apparatus.

Preferably, in the dehydrating system according to one embodiment, the returning means is means for returning a part of the organic aqueous solution having passed through the dehydrating apparatus at a last stage to the dehydrating apparatus at a first stage, and the first preheater also serves as the second preheater.

Preferably, in the dehydrating system according to another embodiment, the number of the dehydrating apparatuses connected in series is three or more, the returning means is means for returning a part of the organic aqueous solution having passed through the dehydrating apparatus at a last stage to the dehydrating apparatus at or after a first stage, and the second preheater is placed upstream of the dehydrating apparatus at or after the first stage. In such an embodiment, the number of the dehydrating apparatuses connected in series is three or more.

Preferably, in the dehydrating system according to still another embodiment, the number of the dehydrating apparatuses connected in series is three or more, the returning means is means for returning a part of the organic aqueous solution having passed through the dehydrating apparatus at or before a last stage to the dehydrating apparatus at or after a first stage, the second preheater is placed upstream of the dehydrating apparatus at or after the first stage, and the dehydrating apparatus at or before the last stage is located downstream of the dehydrating apparatus at or after the first stage. In such an embodiment, the number of the dehydrating apparatuses connected in series is three or more, and the dehydrating apparatuses at or before the last stage are placed downstream of the dehydrating apparatuses at or after the first stage.

Another aspect of the present invention is a dehydrating system including: a preheater for preheating an organic aqueous solution; a dehydrating apparatus for removing water from the preheated organic aqueous solution, the dehydrating apparatus including a water separation membrane portion and a shell portion inside a main body of the dehydrating apparatus, the water separation membrane portion having an inlet for the organic aqueous solution and an outlet for the organic aqueous solution at a lower portion and an upper portion, respectively, of a water separation membrane having one or more vertically extending flow paths which allow the organic aqueous solution to pass therethrough, the shell portion being defined by an outside surface of the water separation membrane portion and an inner wall of the main body of the apparatus, water in the organic aqueous solution permeating through the water separation membrane and moving to the shell portion, as the organic aqueous solution rises in the water separation membrane, to thereby dehydrate the organic aqueous solution; and returning means for returning a part of the organic aqueous solution having passed through the dehydrating apparatus to an upstream location of the preheater.

A different aspect of the present invention is a dehydrating method which includes a water separation step of flowing a preheated organic aqueous solution from an inlet at a lower portion to an outlet at an upper portion of a water separation membrane having one or more vertically extending flow paths which allow the organic aqueous solution to pass therethrough, and reducing a pressure outside the water separation membrane, thereby causing water in the organic aqueous solution to permeate through the water separation membrane, the dehydrating method including the steps of: mixing at least a part of the organic aqueous solution which has undergone the water separation step one or more times with any one of an untreated organic aqueous solution and the organic aqueous solution which has undergone the water separation step fewer times than the organic aqueous solution which has undergone the water separation step one or more times; preheating the mixed organic aqueous solution; and subjecting the preheated organic aqueous solution to the water separation step again.

### EFFECTS OF THE INVENTION

The present invention makes it possible to obtain a dehydrating system which has an improved water separation performance and which achieves a high overall energy efficiency. Specifically, the above-described configurations of the present invention make it possible to keep constant the temperature of the organic aqueous solution in each dehydrating apparatus, thereby increasing the flow rate of the organic aqueous solution in the apparatus. Moreover, the above-described configurations of the present invention allow the simplification of the system.

### BRIEF DESCRIPTION OF THE DRAWINGS

[Fig. 1] Fig. 1 is a conceptual diagram for describing a first embodiment of a dehydrating system according to the present invention.
[Fig. 2] Fig. 2 is a conceptual diagram for describing one embodiment of a dehydrating apparatus according to the present invention.
[Fig. 3] Fig. 3 is a conceptual diagram for describing one embodiment of a water separation membrane portion according to the present invention.
[Fig. 4] Fig. 4 is a conceptual diagram for describing another embodiment of the water separation membrane portion according to the present invention.
[Fig. 5] Fig. 5 is a conceptual diagram for describing a second embodiment of the dehydrating system according to the present invention.
[Fig. 6] Fig. 6 is a conceptual diagram for describing a third embodiment of the dehydrating system according to the present invention.
[Fig. 7] Fig. 7 is a conceptual diagram for describing a fourth embodiment of the dehydrating system according to the present invention.
[Fig. 8] Fig. 8 is a graph showing a temperature distribution of an organic aqueous solution from an inlet to an outlet of a water separation membrane.
[Fig. 9] Fig. 9 is a conceptual diagram for describing a dehydrating system which is not according to the present invention.
[Fig. 10] Fig. 10 is a graph showing a relationship between membrane length and temperature in the dehydrating system shown in Fig. 9.

### EXPLANATION OF REFERENCE NUMERALS

- 1, 1a, 1b, 1c, 1d: Dehydrating apparatus
- 2: Raw material pump
- 3: Preheater
- 4: Cooling unit
- 5: Recycle pump
- 6: Returning means
- 10, 110, 210: Water separation membrane portion
- 10a, 110a, 210a: Inlet for organic aqueous solution
- 10b, 110b, 210b: Outlet for organic aqueous solution
- 10c, 110c, 210c: Flow path
- 10d, 110d, 210d: Water separation membrane
- 11: Shell portion
- 13: Pressure-reducing apparatus
- 14: Duct
- 19: Heat exchanger
- 50: Organic aqueous solution
- 51: Water vapor
- 52: Product
- 53: Recycled organic aqueous solution

Hereinafter, a dehydrating system and a dehydrating method according to the present invention will be described in further details with reference to embodiments thereof. In the following embodiments, dehydrating systems each including a specific number of dehydrating apparatuses are shown as examples; however, the present invention is not limited to such specific numbers of dehydrating apparatuses.

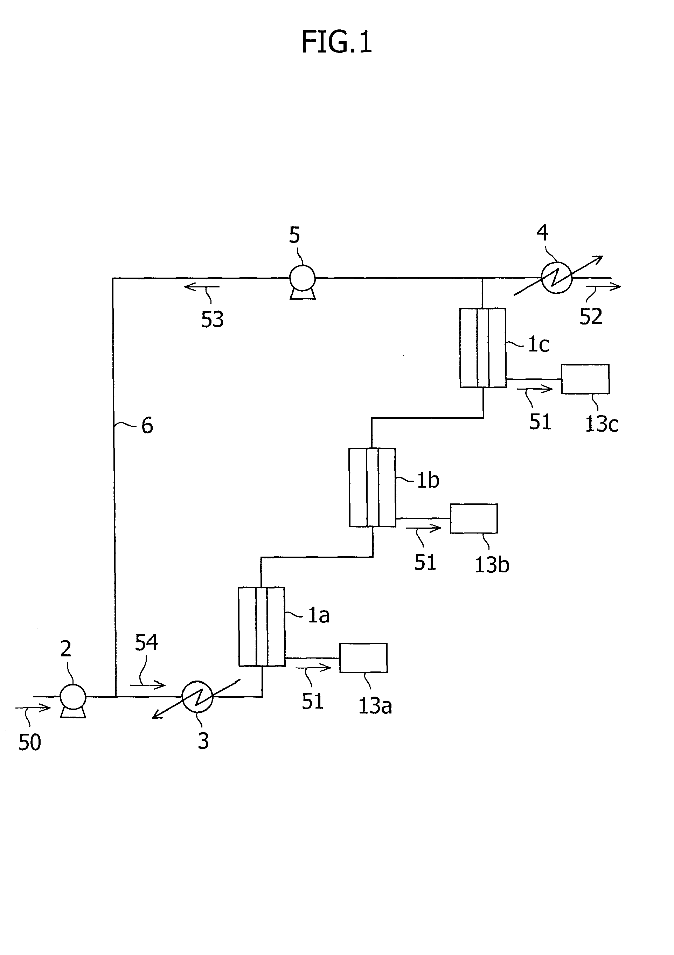

Fig. 1 shows a first embodiment of the dehydrating system according to the present invention.
The dehydrating system shown in Fig. 1 includes, as main components: three dehydrating apparatuses 1a, 1b and 1c; a raw material pump 2; a preheater 3; a cooling unit 4; and returning means 6 including a recycle pump 5.

In the dehydrating system shown in Fig. 1, the raw material pump 2 is placed downstream of a raw material feeding unit which is not shown in the drawing, and the preheater 3 is placed downstream of the raw material pump 2. The dehydrating apparatus 1a at the first stage is placed downstream of the preheater 3. The dehydrating apparatus 1a at the first stage, the dehydrating apparatus 1b at the second stage and the dehydrating apparatus 1c at the third stage are connected in series. No preheater is placed between these dehydrating apparatuses. A pipe led from the dehydrating apparatus 1c at the third stage is branched into two pipes at a downstream location of the dehydrating apparatus 1c at the third stage. The cooling unit 4 is placed downstream of one of the pipes. The other one of the pipes forms the returning means 6. The returning means is connected to a pipe connecting the raw material pump 2 to the preheater 3. The returning means 6 is provided with the recycle pump 5.

Each of the three dehydrating apparatuses 1a, 1b and 1c is an apparatus for removing water from an organic aqueous solution by a pervaporation method using a water separation membrane. Here, the organic aqueous solution refers to a mixture of water with a liquid miscible with water. Examples of the liquid miscible with water include: ethanol, methanol, and isopropyl alcohol; acids such as acetic acid; and ketones such as acetone. However, the liquid miscible with water is not limited thereto. Each of such dehydrating apparatuses 1a, 1b, and 1c typically include a water separation membrane portion and a shell portion inside a main body of the dehydrating apparatus. The water separation membrane portion has an inlet for the organic aqueous solution and an outlet for the organic aqueous solution at a lower portion and an upper portion, respectively, of a water separation membrane having one or more vertically extending flow paths which allow the organic aqueous solution to pass therethrough. The shell portion is defined by an outside surface of the water separation membrane portion and an inner wall of the main body of the apparatus. A connection port to pressure-reducing means is provided in the shell portion near the inlet for the organic aqueous solution. Water in the organic aqueous solution permeates through the water separation membrane and moves to the shell portion, as the organic aqueous solution rises in the water separation membrane, to thereby dehydrate the organic aqueous solution.

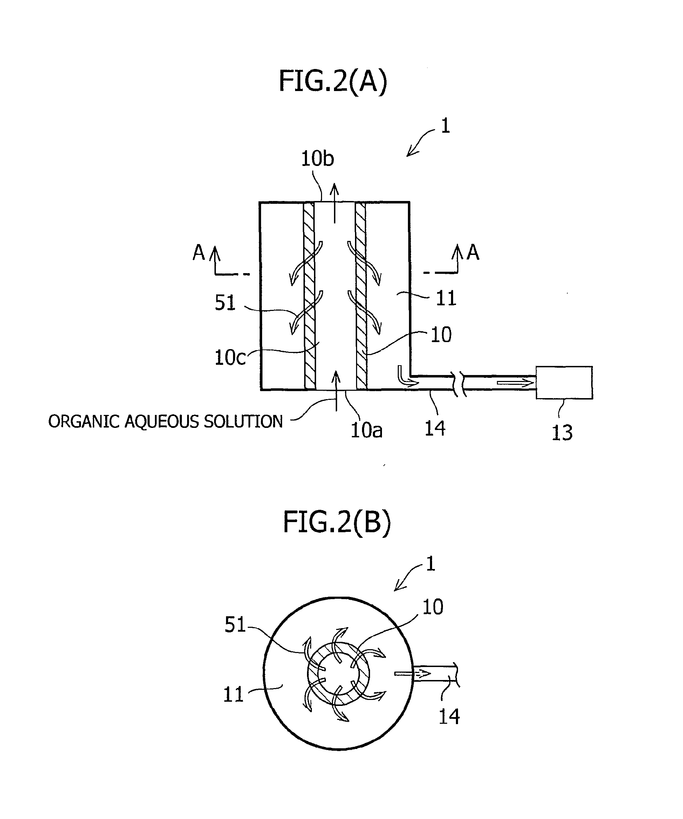

Fig. 2 shows an example of an apparatus which can be used as any of the dehydrating apparatuses 1a, 1b and 1c, and description thereof will be made. Fig. 2(A) is a conceptual cross-sectional diagram of a dehydrating apparatus 1, and Fig. 2(B) is a section taken along the line A-A in Fig. 1A. The dehydrating apparatus 1 shown in Fig. 2 includes, inside a main body of the dehydrating apparatus 1, a water separation membrane portion 10, a shell portion 11, and a vacuum duct 14, as main components. To the main body of the dehydrating apparatus, a pressure-reducing apparatus 13 is connected.

The water separation membrane portion 10 is formed of a water separation membrane 10d. An inlet 10a for an organic aqueous solution and an outlet 10b for the organic aqueous solution exist at a bottom end and a top end, respectively, of the water separation membrane portion 10. Inside the water separation membrane portion 10, one or more vertically extending hollow portions which allow the organic aqueous solution to pass therethrough are formed as a flow path 10c for the organic aqueous solution. The shell portion 11 is positioned around a side surface of the water separation membrane portion 10. The vacuum duct 14 is provided at a lower portion of the shell portion 11 and near the inlet 10a for the organic aqueous solution. The vacuum duct 14 is connected to the pressure-reducing apparatus 13.

The water separation membrane portion 10 separates an organic aqueous solution into an anhydrous product and water. As such a water separation membrane portion 10, those with various configurations have been known and are commercially available. As the water separation membrane portion in this embodiment, for example, a monolithic-type or tubular-type water separation membrane portion can be used.

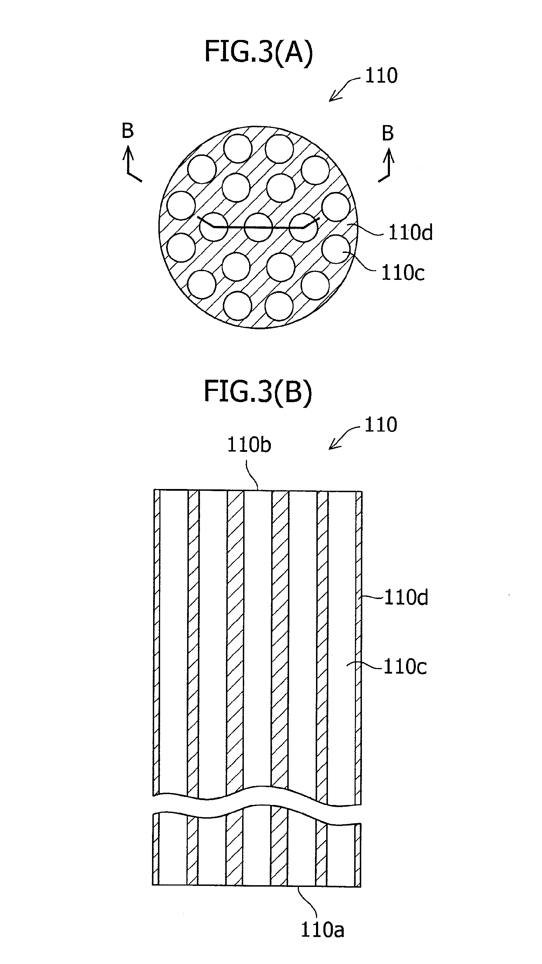

Fig. 3A and Fig. 3B shows an example of a monolithic-type water separation membrane portion 110, and description thereof will be made. Fig. 3B is a section taken along the line B-B in Fig. 3A. In the monolithic-type water separation membrane portion, multiple flow paths 110c for an organic aqueous solution are provided in a cylindrical water separation membrane 110d. The multiple flow paths 110c for the organic aqueous solution correspond to the one or more vertically extending hollow portions which allow the organic aqueous solution to pass therethrough. Normally, in a water separation membrane in such a configuration, the flow paths 110c for the organic aqueous solution inside the water separation membrane are referred to as a primary side or a feed side of the membrane, whereas the outside of the water separation membrane 110d is called a secondary side or a permeation side of the membrane.

For a pervaporation membrane separation using such a water separation membrane portion, the water separation membrane portion 110 is preferably set so that the direction of the flow paths can be parallel to the vertical direction. Then, while the pressure on the permeation side of the water separation membrane portion 110 is reduced, an organic aqueous solution is fed from an inlet 110a on a lower side in the vertical direction, and flowed in a direction opposite to that of the gravity. Thereby, the organic aqueous solution is discharged from an outlet 110b on an upper side in the vertical direction. Through such operation, water in the organic aqueous solution is extracted as water vapor through the side surface of the cylindrical water separation membrane 110d to the permeation side. As a result, the organic aqueous solution recovered through the outlet 110b of the water separation membrane portion has been dehydrated.

The monolithic-type water separation membrane portion 110 shown in the drawing is a schematic one. A water separation membrane portion in which 30 holes with a diameter of 3 mm are provided in a cylindrical water separation membrane with a diameter of 30 mm can be used as an example. As another example, a water separation membrane portion in which 200 holes with a diameter of 2 mm are provided in a water separation membrane portion with a diameter from 150 to 200 mm can be used. The length of the water separation membrane portion can be determined as appropriate by one skilled in the art in accordance with the desired membrane performance. For example, those with a length from 150 mm to 1 m can be used.

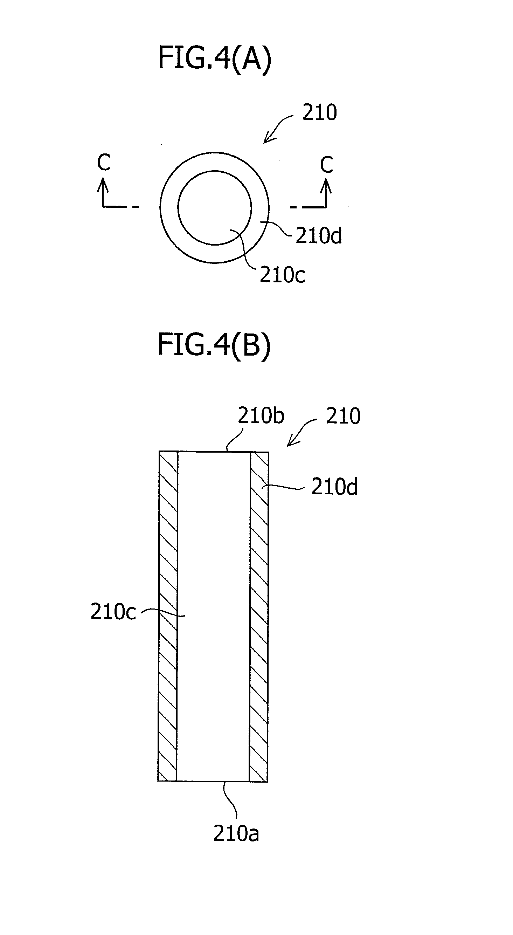

As another example, Fig. 4A and Fig. 4B show a tubular-type water separation membrane portion, and description thereof will be made. Fig. 4B is a section taken along the line C-C in Fig. 4A. The tubular-type water separation membrane portion 210 is a pipe-like water separation membrane 210d in which only one flow path 210c for an organic aqueous solution is provided. The installation mode and the operation and effect of the tubular-type water separation membrane portion 210 are the same as those of the monolithic-type water separation membrane portion. An example of the tubular-type water separation membrane portion which can be used is one having an outer diameter of 10 mm and an inner diameter of 7 mm. Another example of the tubular-type water separation membrane portion which can be used is one having an outer diameter of 30 mm and an inner diameter of 22 mm. One with a length from 150 mm to 1 m can be used, for example.

Regarding the material of the water separation membrane which forms the water separation membrane portion, a porous membrane, with fine pores, made of an inorganic material and having a precisely controlled pore diameter of a nano order or smaller can be used. The porous membrane with fine pores exhibits a molecular sieve effect of allowing a small molecular gas to pass therethrough and excluding a large molecular gas. The permeability constant of the porous membrane with fine pores shows a behavior of activated diffusion in which the permeability constant increase with increase in temperature. Examples of the porous membrane with fine pores include carbon membranes, silica membranes, and zeolite membranes. In this embodiment, as the water separation membrane, a silica-based or zeolite-based inorganic water separation membrane having a pore diameter of 10 angstroms or less is suitable.

Moreover, an inorganic water separation membrane described in Japanese Patent No. 2808479 may be adopted. The inorganic water separation membrane of Japanese Patent No. 2808479 is an acid-resistant composite separation membrane obtained by supporting, in pores of a porous inorganic material, silica gel obtained through hydrolysis of an ethoxy or methoxy group-containing alkoxysilane.

The configuration, size, and material of the water separation membrane portion can be selected as appropriate by one skilled in the art in accordance with the purpose of the use.

The shell portion 11 is located around the water separation membrane portion 10, corresponds to the permeation side of the water separation membrane, and serves as a flow path for the water vapor 51 released from the side surface of the water separation membrane portion 10. In the dehydrating apparatus 1 shown in the drawing, the shell portion 11 is a gap portion defined by the side surface of the water separation membrane portion 10 and an inner wall of the main body of the dehydrating apparatus 1. The shell portion 11 has such a configuration that the organic aqueous solution before being fed to the water separation membrane portion 10 or the organic aqueous solution discharged from the water separation membrane portion 10 is prevented from flowing into the shell portion 11.

The vacuum duct 14 is provided at the lower portion of the shell portion 11 and near the inlet 10a of the water separation membrane portion 10. The vacuum duct 14 serves as a connection port for connection to the pressure-reducing apparatus 13. Through the vacuum duct 14, the water vapor 51 released to the shell portion 11 is recovered. The vacuum duct 14 may be provided horizontally as shown in the drawing; alternatively, the vacuum duct 14 may be provided so as to extend downwardly in the vertical direction. The orientation of the vacuum duct 14 is not limited.

The pressure-reducing apparatus 13 is means for reducing the pressure in the shell portion 11, thereby sucking the water vapor released from the water separation membrane portion 10. As the pressure-reducing apparatus 13, an ordinary vacuum pump or the like can be used, as long as the pressure can be reduced to approximately 10 to 100 torr (1333.22 to 13332.2 Pa).

In this embodiment, the configuration of a dehydrating apparatus 1 including one water separation membrane portion 10 is shown for simplicity of the description. However, the dehydrating apparatus according to the present invention may include, inside the main body of the dehydrating apparatus, multiple water separation membrane portions connected in parallel. The provision of the multiple water separation membrane portions connected in parallel inside the main body of the dehydrating apparatus can increase the amount of the organic aqueous solution treated by one dehydrating apparatus at once.

Any dehydrating apparatus having the above-descried function can be used in the dehydrating system according to this embodiment. All the three dehydrating apparatuses 1a, 1b and 1c may be dehydrating apparatuses of the same type, or dehydrating apparatuses which are partially different from one another. For example, a dehydrating apparatus including a tubular-type water separation membrane and a dehydrating apparatus including a monolithic-type water separation membrane may be alternately provided.

As the raw material pump 2, for example, a pump of diaphragm type, of centrifugal type, or of plunger type can be used, but the raw material pump 2 is not limited thereto.

The preheater 3 placed upstream of the dehydrating apparatus 1a only needs to be capable of heating the organic aqueous solution fed to the dehydrating apparatus 1a, and an ordinary heat exchanger or an ordinary heater can be used as the preheater 3. In particular, one capable of heating an organic aqueous solution 54 which is a mixture of an organic aqueous solution 50 serving as the raw material and a recycled organic aqueous solution 53 to a temperature which is close to the azeotropic point of the organic aqueous solution 54 but which is at the azeotropic point or lower

The cooling unit 4 placed downstream of the dehydrating apparatus 1c only needs to be capable of cooling the hot organic aqueous solution, having a reduced water content after passing through the dehydrating apparatus 1c, to normal temperature. An ordinary heat exchanger can be used as the cooling unit 4.

The returning means 6 is means for returning a part of the hot organic aqueous solution having passed through the dehydrating apparatus 1c to an upstream location of the dehydrating apparatus 1c. Typically, the returning means 6 is a pipe. The returning means 6 is connected at a point between the raw material pump 2 and the preheater 3. The recycle pump 5 forms a part of the returning means 6. The same ones as those usable for the raw material pump can be used.

The dehydrating system with such a configuration is capable of efficiently removing water from an organic aqueous solution, thereby concentrating the organic aqueous solution. Next, description will be made of one embodiment of a method for dehydrating an organic aqueous solution by using such a dehydrating apparatus system according to the above-described embodiment.

The dehydrating method according to the first embodiment is a dehydrating method including a water separation step of flowing a preheated organic aqueous solution from an inlet at a lower portion to an outlet at an upper portion of a water separation membrane having one or more vertically extending flow paths which allow the organic aqueous solution to pass therethrough, and reducing a pressure outside the water separation membrane, thereby causing water in the organic aqueous solution to permeate through the water separation membrane. The dehydrating method includes the steps of: mixing an untreated organic aqueous solution with a part of the organic aqueous solution which has undergone the water separation step three times; preheating the mixed organic aqueous solution; and subjecting the preheated organic aqueous solution again to the water separation step at least three times.

A target organic aqueous solution of the dehydrating method according to this embodiment is generally an organic aqueous solution which is a mixture of water with a liquid miscible with water. Specifically, examples of the target organic aqueous solution include a mixture of ethanol with water, a mixture of propanol with water, a mixture of isopropyl alcohol with water, and a mixture of an acid such as acetic acid with water. In the method according the this embodiment, these are dehydrated to, for example, a 99.7% anhydrous product, which is suitable for application as a fuel, or to 99.99% or more, which corresponds to semiconductor-substrates cleaning application. The organic aqueous solution has an alcohol or acid concentration of 80 to 95 wt% as a result of treatment on a mixture serving as the raw material in a distillation tower or with an alcohol selective membrane. Note that the organic aqueous solution to be treated may be a pressurized organic aqueous solution. The use of the pressurized organic aqueous solution makes it possible to raise the temperature of the organic aqueous solution to be fed to the dehydrating apparatus 1 according to this embodiment without gasifying the organic aqueous solution. In this case, for example, an organic aqueous solution pressurized to 1.5 atm to 10 atm, preferably 2 atm to 3 atm, can be used.

Hereinafter, description will be made on the dehydrating method using a mixture of water with ethanol which is useful as a fuel as an example of the organic aqueous solution. The concentration of ethanol in the raw material according to this embodiment is preferably 95 wt%. An organic aqueous solution 50 which is the raw material and which is a mixture of 95 wt% of ethanol and 5 wt% of water is transferred by the raw material pump 2 from an feed source which is not shown in the drawing. The organic aqueous solution 50 which is the raw material is mixed, at an upstream location of the preheater 3, with the recycled organic aqueous solution 53 from the returning means 6.

The recycled organic aqueous solution 53 is, in general, a mixture of approximately 99 to 99.7 wt% of ethanol with approximately 0.3 to 1 wt% of water, depending on the recycle ratio. Meanwhile, the temperature of the recycled organic aqueous solution 53 varies depending on the recycle ratio. When the recycle ratio is approximately 1 to 5, the temperature is around 65 to 78°C. Here the recycle ratio refers to the ratio of the recycled organic aqueous solution 53 to the organic aqueous solution 50 which is the raw material. An increased recycle ratio makes it possible to raise the temperature of the organic aqueous solution at the outlet of each of the dehydrating apparatuses 1a, 1b and 1c, and to increase the ethanol concentration in a product 52. Meanwhile, to increase the recycle ratio, power of the recycle pump 5 is required. Accordingly, the recycle ratio increased more than necessary may result in great energy loss. Thus, the recycle ratio can be determined as appropriate by one skilled in the art on the basis of the desired concentration of a product 52, the temperature of the organic aqueous solution at the outlet of each of the dehydrating apparatuses 1a, 1b and 1c, and the overall energy efficiency. The recycle ratio can be set to, for example, 1 to 5, but is not limited thereto.

The temperature of the mixed organic aqueous solution 54 is raised in the preheater 3. The temperature of the organic aqueous solution after the temperature rise is preferably set from 70°C to less than 80°C, which is close to the azeotropic point of ethanol and water but lower than the azeotropic point (approximately 80°C). This is because the higher the temperature of the organic aqueous solution is, the greater the permeation flux becomes, which results in improvement in membrane performance, and because, at a temperature higher than the azeotropic point, a part of the organic aqueous solution is vaporized, resulting in removal of the latent heat of vaporization. The organic aqueous solution whose temperature is raised in the preheater 3 is fed to the dehydrating apparatus 1a at the first stage through the inlet, for the organic aqueous solution, of the water separation membrane portion 10.

In the dehydrating apparatus 1 at the first stage, the pressure in the shell portion 11 is reduced when the organic aqueous solution is fed to the water separation membrane portion 10. At this time, the pressure reduction is preferably performed so that the pressure in the shell portion 11 can reach approximately 10 to 100 torr (1333.22 to 13332.2 Pa). This is because separation is facilitated by the pressure difference between the feed side and the permeation side of the water separation membrane. The pressure is reduced through the vacuum duct 14 provided at the lower part of the shell portion 11.

The organic aqueous solution flows through the flow path 10c from the bottom to the top in the water separation membrane portion 10. In the meantime, water in the organic aqueous solution is taken out as the water vapor 51 through the separation membranes 10d to the shell portion 11. The organic aqueous solution is deprived of heat of vaporization at all time of the vaporization of water. Accordingly, the temperature of the organic aqueous solution discharged through the outlet 10b becomes slightly lower than that at the time of the feed, and the concentration of water contained in the organic aqueous solution also becomes lower.

The water vapor 51 released to the shell portion 11 is convected from the top to the bottom of the shell portion 11. This is because the suction for pressure reduction is performed through the bottom part of the shell portion 11. The water vapor 51 is convected to the duct 14 as shown in Fig. 2B, and recovered through the duct 14. The recovered water vapor 51 is condensed in a cooling unit such as a heat exchanger which is not shown in the drawing downstream of the duct 14. Note that the position of the suction for pressure reduction and the direction of the convection described in this embodiment are merely shown as an example, and the position of the suction for pressure reduction and the direction of the convection are not limited to such a configuration. As another example of the configuration, the water vapor can be convected from the bottom to the top and flow in parallel with the organic aqueous solution.

The organic aqueous solution having passed through the dehydrating apparatus 1a at the first stage is fed to the dehydrating apparatus 1b at the second stage without passing through any preheater or the like. At this time, the temperature of the organic aqueous solution varies depending on the recycle ratio. When the recycle ratio is approximately 1 to 5, the temperature is approximately 47 to 75°C, and the ethanol concentration in the organic aqueous solution is approximately 96 to 98.5%. Dehydration treatment is performed in the dehydrating apparatus 1b at the second stage in a similar manner as in the dehydrating apparatus 1a at the first stage. As a result, water 51 is discharged by the pressure-reducing apparatus, and a further dehydrated organic aqueous solution is discharged from the dehydrating apparatus 1b.

The organic aqueous solution having passed through the dehydrating apparatus 1b at the second stage is fed to the dehydrating apparatus 1c at the third stages without passing through any preheater or the like. The temperature of the organic aqueous solution fed to the dehydrating apparatus 1c at the third stage varies depending on the recycle ratio. When the recycle ratio is approximately 1 to 5, the temperature is approximately 48 to 76°C, and the ethanol concentration in the organic aqueous solution is approximately 97.5 to 99.3%. Dehydration treatment is performed in the dehydrating apparatus 1c at the third stage in a similar manner as in the dehydrating apparatus 1a at the first stage and in the dehydrating apparatus 1b at the second stage. Thereby, a still further dehydrated organic aqueous solution is discharged from the dehydrating apparatus 1c. The temperature of the organic aqueous solution at the outlet of the dehydrating apparatus 1c at the third stage varies depending on the recycle ratio. When the recycle ratio is approximately 1 to 5, the temperature is approximately 50 to 79°C, and the ethanol concentration in the organic aqueous solution is approximately 98.6 to 99.6%.

A part of the organic aqueous solution discharged from the dehydrating apparatus 1c is cooled to approximately 35°C or below in the cooling unit 4 downstream, and thereby a product 52 is formed. The remainder is returned as the recycled organic aqueous solution 53 to an upstream location of the preheater 3. The ratio between the organic aqueous solution to form the product 52 and the recycled organic aqueous solution 53 is determined from the recycle ratio described above.

After the recycled organic aqueous solution 53 has been subjected to the water separation step in the dehydrating apparatuses 1a, 1b and 1c of the three stages, the ethanol is concentrated to approximately 50 to 79%, and the temperature reaches approximately 98.6 to 99.6°C, depending on the recycle ratio. The recycled aqueous solution 53 is returned to the upstream location of the preheater 3 through the pipe and by the recycle pump 5 which form the returning means 6.

Note that the temperature and ethanol concentration at each stage shown in this embodiment are only examples, and the temperature and the concentration is are not limited to these values, because the temperature and the concentration vary depending on membrane performance.
The system and the method using the dehydrating apparatuses of the three stages have been described in this embodiment; however, the present invention is not limited to a system or a method using dehydrating apparatuses of three stages. In accordance with a desired product concentration, for example, the dehydrating system may include dehydrating apparatuses of two stages, or the dehydrating system may include dehydrating apparatuses of four stages to ten stages or more stages.

In the method according to this embodiment shown in Fig. 1, the hot recycled organic aqueous solution 53 is mixed with the organic aqueous solution 50 which serves as the raw material. Thereby, as compared with a case of a one pass method, the flow amount is increased, and the amount of heat supplied to the preheater 3 and the dehydrating apparatuses 1a, 1b and 1c is increased. The increment in latent heat which is taken away during permeation through the water separation membranes is smaller than the increment in the amount of heat supplied. For this reason, the method according to this embodiment has an advantage that decrease in temperature of the organic aqueous solution in the dehydrating apparatus can be suppressed.
Meanwhile, the increase in flow rate results in suppression of concentration polarization in the water separation membranes. Concentration polarization in a water separation membrane refers to a phenomenon in which, in a pipe-like water separation membrane, the water concentration is higher at a central portion of the pipe, and the water concentration is lower in the vicinity of the separation membrane, thereby reducing the permeation performance of the water separation membrane. When the recycle ratio is approximately 4 to approximately 9, the dehydrating system according to this embodiment makes it possible to increase the flow rate to approximately 5 times to approximately 10 times that of a case where the organic aqueous solution is flowed by a one-pass method without recycling the treated organic aqueous solution.
Furthermore, since the organic aqueous solution 54 obtained by mixing the recycled organic aqueous solution with the organic aqueous solution which is the raw material is fed to the dehydrating apparatus at the first stage, the water concentration in the solution fed to the dehydrating apparatus at the first stage is lower than that in the organic aqueous solution which is the raw material. In this case, variation in water concentration in the organic aqueous solution fed to the dehydrating apparatuses is small, which provides an advantage that the degrees of degradation of the water separation membranes of all the dehydrating apparatuses can be similar to one another.
Still furthermore, the provision of a preheater at upstream locations of dehydrating apparatuses at and after the second stage is unnecessary, which provides an advantage that the overall energy efficiency of the system is excellent.
The power which drives the recycle pump required for recycling is 1/100 of the power for supplying the same amount of heat as that of the recycled organic aqueous solution by a preheater upstream of the dehydrating apparatus, when calculated assuming that the recycle ratio is 5 times, the pressure difference is 20 m, and the pump efficiency is 50%. Accordingly, in also this respect, the overall energy efficiency of the system is excellent.

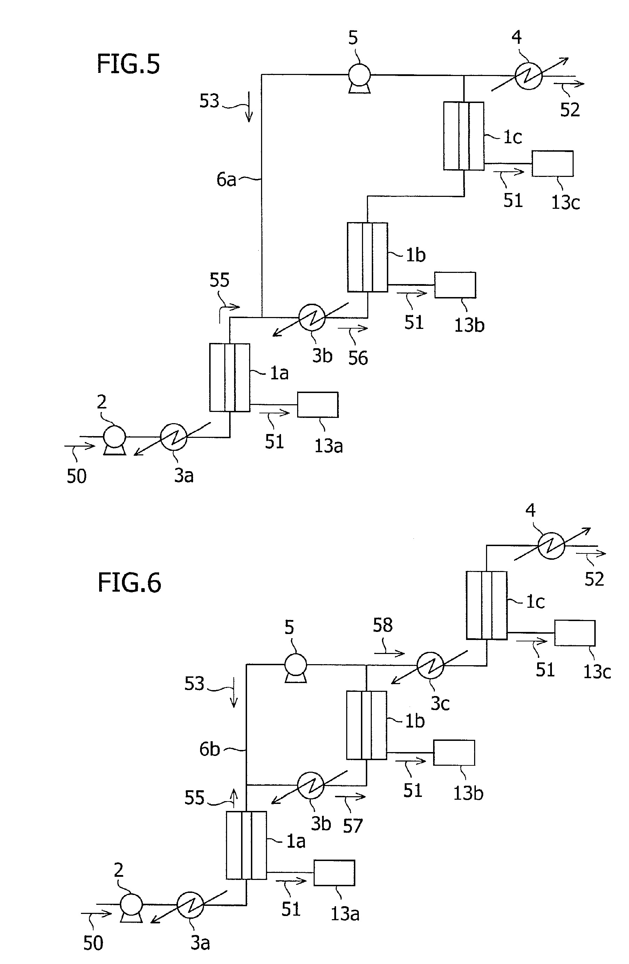

Fig. 5 shows a second embodiment of the dehydrating system according to the present invention.
The dehydrating system shown in Fig. 5 includes, as main components, three dehydrating apparatuses 1a, 1b and 1c, a raw material pump 2, two preheaters 3a and 3b, a cooling unit 4, and returning means 6a including a recycle pump 5.

In the dehydrating system shown in Fig. 5, the raw material pump 2 is placed downstream of a raw material feeding unit which is not shown in the drawing, and the preheater 3a is placed downstream of the raw material pump 2. The dehydrating apparatus 1a at the first stage is placed downstream of the preheater 3a. The second preheater 3b is placed downstream of the dehydrating apparatus 1a at the first stage. Moreover, downstream thereof, the dehydrating apparatus 1b at the second stage is placed. To a downstream location of the dehydrating apparatus 1b at the second stage, the dehydrating apparatus 1c at the third stage is connected in series. No preheater is placed between the dehydrating apparatus 1b at the second stage and the dehydrating apparatus 1c at the third stage. A pipe led from the dehydrating apparatus 1c at the third stage is branched into two pipes at a downstream location of the dehydrating apparatus 1c at the third stage. The cooling unit 4 is placed downstream of one of the pipes, and the other one of the pipes forms the returning means 6a. The returning means 6a is connected to a pipe connecting the dehydrating apparatus 1a at the first stage to the second preheater 3b. The returning means 6 is provided with the recycle pump 5.

This embodiment differs from the first embodiment in that the second preheater 3b is placed between the dehydrating apparatus 1a at the first stage and the dehydrating apparatus 1b at the second stage, and that the returning means 6a is connected to the pipe connecting the dehydrating apparatus 1a at the first stage to the second preheater 3b. The second preheater 3b may be the same as the first preheater 3a, and the same apparatus can be used.

Next, a dehydrating method using the dehydrating system shown in Fig. 5 will be described. The dehydrating method according to the second embodiment is a dehydrating method including a water separation step of flowing a preheated organic aqueous solution from an inlet at a lower portion to an outlet at an upper portion of a water separation membrane having one or more vertically extending flow paths which allow the organic aqueous solution to pass therethrough, and reducing a pressure outside the water separation membrane, thereby causing water in the organic aqueous solution to permeate through the water separation membrane. The dehydrating method includes the steps of: mixing a part of the organic aqueous solution which has undergone the water separation step three times with the organic aqueous solution which has undergone the water separation step twice; preheating the mixed organic aqueous solution; and subjecting again the preheated organic aqueous solution to the water separation step at least twice.

Since, in the dehydrating method according to this embodiment, the organic aqueous solution which serves as a raw material and the concentration thereof are the same as those in the first embodiment, the description thereof is omitted. The organic aqueous solution 50 which is the raw material and which is a mixture of 95 wt% of ethanol and 5 wt% of water is transferred by the raw material pump 2 from a feed source which is not shown in the drawing. The temperature of the organic aqueous solution 50 which is the raw material is raised in the preheater 3a. The temperature of the organic aqueous solution after the temperature rise is preferably set from 70°C to less than 80°C, which is close to the azeotropic point of ethanol and water but lower than the azeotropic point (approximately 80°C). The organic aqueous solution whose temperature is raised in the preheater 3a is fed to the dehydrating apparatus 1a at the first stage through the inlet, for the organic aqueous solution, of the water separation membrane portion 10. At this time, the concentration of the organic aqueous solution is the same as that of the raw material. The flow rate of the organic aqueous solution fed to the water separation membrane portion can be determined as appropriate by one skilled in the art in relation to the permeation flux.

Since the water separation step of the organic aqueous solution in the dehydrating apparatus 1a at the first stage is the same as that in the first embodiment, the description thereof is omitted. An organic aqueous solution 55 having passed through the dehydrating apparatus at the first stage is mixed with the recycled organic aqueous solution 53 from feeding means 6a at an upstream location of the preheater 3b at the second stage. The mixing ratio of the organic aqueous solution having passed through the dehydrating apparatus 1a at the first stage to the recycled organic aqueous solution 53 is determined on the basis of the recycle ratio. The recycle ratio can be determined as appropriate by one skilled in the art on the basis of the desired concentration of a product 52, the temperature of the organic aqueous solution at the outlet of each of the dehydrating apparatuses 1a, 1b and 1c, and the overall energy efficiency. For example, the recycle ratio can be 1 to 5, but is not limited thereto.

The temperature of an organic aqueous solution 56 thus mixed is raised in the preheater 3b at the second stage. The organic aqueous solution whose temperature is raised in the preheater 3b at the second stage is fed to the dehydrating apparatus 1b at the second stage through the inlet, for the organic aqueous solution, of the water separation membrane portion 10. The flow rate of the organic aqueous solution fed to the water separation membrane portion can be determined as appropriate by one skilled in the art in relation to the recycle ratio and the like. Meanwhile, the ethanol concentration in the organic aqueous solution fed to the dehydrating apparatus 1b at the second stage is also a value variable depending on the recycle ratio.

Since the water separation step in each of the dehydrating apparatus 1b at the second stage and the dehydrating apparatus 1c at the third stage, and the branching of the flow of the recycled organic aqueous solution having passed through the dehydrating apparatus 1c at the third stage are the same as those in the first embodiment, the description thereof is omitted.

Note that the system and the method using the dehydrating apparatuses of the three stages have been described in the second embodiment; however, the present invention is not limited to a system or a method using dehydrating apparatuses of three stages. In accordance with a desired product concentration, for example, the dehydrating system may include dehydrating apparatuses of four stages, or the dehydrating system may include dehydrating apparatuses of five stages to ten stages. For example, for a dehydrating system including dehydrating apparatuses of four stages, a system may be employed in which the organic aqueous solution from the outlet of the dehydrating apparatus at the fourth stage is returned as the recycled organic aqueous solution to the dehydrating apparatus at the second stage. In this case, the recycled aqueous solution is preheated in a preheater upstream of the dehydrating apparatus at the second stage. Meanwhile, a system may be employed in which the organic aqueous solution from the outlet of the dehydrating apparatus at the fourth stage is returned as the recycled organic aqueous solution to the dehydrating apparatus at the third stage. In this case, the recycled aqueous solution is preheated in a preheater upstream of the dehydrating apparatus at the third stage.
For a dehydrating system including dehydrating apparatuses of five or more stages, a dehydrating system can be employed in which, likewise, returning means for returning the organic aqueous solution discharged from the dehydrating apparatus at a last stage to a dehydrating apparatus at any stage at or after the second stage.

According to the second embodiment, the recycled organic aqueous solution having passed through the dehydrating apparatus at the third stage is returned to the upstream location of the dehydrating apparatus at the second stage. Thereby, the recycled organic aqueous solution is mixed with a high-concentration organic aqueous solution which has been dehydrated to a certain degree in the dehydrating apparatus at the first stage. This has a merit that the recycle ratio can be lowered, thereby requiring a smaller power for the recycle pump 5.

Fig. 6 shows a third embodiment of the dehydrating system according to the present invention.
The dehydrating system shown in Fig. 6 includes, as main components: three dehydrating apparatuses 1a, 1b and 1c; a raw material pump 2; three preheaters 3a, 3b and 3c; a cooling unit 4; and returning means 6b including a recycle pump 5.

In the dehydrating system shown in Fig. 6, the raw material pump 2 is placed downstream of a raw material feeding unit which is not shown in the drawing, and a preheater 3a is placed downstream of the raw material pump 2. The dehydrating apparatus 1a at the first stage is placed downstream of the preheater 3a. The second preheater 3b is placed downstream of the dehydrating apparatus 1a at the first stage, and further downstream thereof, the dehydrating apparatus 1b at the second stage is placed. A pipe led from the dehydrating apparatus 1b at the second stage is branched into two pipes at a downstream location of the dehydrating apparatus 1b at the second stage. The third preheater 3c is placed downstream of one of the branched pipes, and, further downstream thereof, the dehydrating apparatus 1c at the third stage is placed. The cooling unit 4 is placed downstream of the dehydrating apparatus 1c at the third stage. The other one of the branched pipes is the returning means 6b. The returning means 6b is connected to a pipe connecting the dehydrating apparatus 1a at the first stage to the second preheater 3b. The returning means 6b is provided with the recycle pump 5.

This embodiment differs from the second embodiment in that the third preheater 3c is placed between the dehydrating apparatus 1b at the second stage and the dehydrating apparatus 1c at the third stage, and that the returning means 6b is branched at the downstream location of the dehydrating apparatus 1b at the second stage. The third preheater 3c may be the same as the first preheater 3a and the second preheater 3b, and the same apparatus can be used.

Next, a dehydrating method using the dehydrating system shown in Fig. 6 will be described. The dehydrating method according to the third embodiment is a dehydrating method including a water separation step of flowing a preheated organic aqueous solution from an inlet at a lower portion to an outlet at an upper portion of a water separation membrane having one or more vertically extending flow paths which allow the organic aqueous solution to pass therethrough, and reducing a pressure outside the water separation membrane, thereby causing water in the organic aqueous solution to permeate through the water separation membrane. The dehydrating method includes the steps of: mixing a part of the organic aqueous solution which has undergone the water separation step twice with the organic aqueous solution which has undergone the water separation step once; preheating the mixed organic aqueous solution; and subjecting again the preheated organic aqueous solution to the water separation step at least twice.

Since, in the dehydrating method according to this embodiment, the organic aqueous solution which serves as a raw material and the concentration thereof are the same as those in the first embodiment, the description thereof is omitted. The organic aqueous solution 50 which is the raw material and which is a mixture of 95 wt% of ethanol and 5 wt% of water is transferred by the raw material pump 2 from a feed source which is not shown in the drawing. The temperature of the organic aqueous solution 50 which is the raw material is raised in the preheater 3a. The temperature of the organic aqueous solution after the temperature rise is preferably set from 70°C to less than 80°C, which is close to the azeotropic point of ethanol and water but lower than the azeotropic point (approximately 80°C). The organic aqueous solution whose temperature is raised in the preheater 3a is fed to the dehydrating apparatus 1a at the first stage through the inlet, for the organic aqueous solution, of the water separation membrane portion 10. At this time, the concentration of the organic aqueous solution is the same as that of the raw material. The flow rate of the organic aqueous solution fed to the water separation membrane portion can be determined as appropriate by one skilled in the art in relation to the permeation flux.

Since the water separation step of the organic aqueous solution in the dehydrating apparatus 1a at the first stage is the same as that in the first embodiment, the description thereof is omitted. The organic aqueous solution 55 having passed through the dehydrating apparatus 1a at the first stage is mixed with a recycled organic aqueous solution 53 from feeding means 6b at an upstream location of the preheater 3b at the second stage. The mixing ratio of the organic aqueous solution having passed through the dehydrating apparatus 1a at the first stage to the recycled organic aqueous solution 53 is determined on the basis of the recycle ratio. The recycle ratio can be determined as appropriate by one skilled in the art on the basis of the desired concentration of a product 52, the temperature of the organic aqueous solution at the outlet of each of the dehydrating apparatuses 1a, 1b and 1c, and the overall energy efficiency. For example, the recycle ratio can be 1 to 5, but is not limited thereto.

The temperature of a mixed organic aqueous solution 57 is raised in the preheater 3b at the second stage. The organic aqueous solution whose temperature is raised in the preheater 3b at the second stage is fed to the dehydrating apparatus 1b at the second stage through the inlet, for the organic aqueous solution, of the water separation membrane portion 10. The flow rate of the organic aqueous solution fed to the water separation membrane portion is determined as appropriate on the basis of the recycle ratio. Meanwhile, the ethanol concentration in the organic aqueous solution fed to the dehydrating apparatus 1b at the second stage is also a value variable depending on the recycle ratio.

At the downstream location of the dehydrating apparatus 1b at the second stage, the organic aqueous solution having passed through the dehydrating apparatus 1b at the second stage is divided into the recycled organic aqueous solution 53 and an organic aqueous solution 58 to be fed to the dehydrating apparatus 1c at the third stage. The ratio at this time is determined from the above-described recycle ratio. The recycled organic aqueous solution 53 is returned by the returning means 6b to an upstream location of the preheater 3b at the second stage. The temperature of the organic aqueous solution 58 to be fed to the dehydrating apparatus 1c at the third stage is raised in the preheater 3c at the third stage, and then the organic aqueous solution 58 whose temperature is raised is fed to the dehydrating apparatus 1c at the third stage. Since the water separation step in the dehydrating apparatus 1c at the third stage and an organic aqueous solution 52 having passed through the dehydrating apparatus 1c at the third stage to form a product are the same as those in the first embodiment, the description thereof is omitted.

Note that the system and the method using the dehydrating apparatuses of the three stages have been described in the third embodiment; however, the present invention is not limited to a system or a method using dehydrating apparatuses of three stages. In accordance with a desired product concentration, for example, the dehydrating system may include dehydrating apparatuses of four stages, or the dehydrating system may include dehydrating apparatuses of five stages to ten stages. For example, for a dehydrating system including dehydrating apparatuses of four stages, a system can be employed in which the organic aqueous solution from the outlet of the dehydrating apparatus at the third stage is returned as the recycled organic aqueous solution to the dehydrating apparatus at the second stage. In this case, the recycled aqueous solution is preheated in a preheater upstream of the dehydrating apparatus at the second stage. Then, also at an upstream location of the dehydrating apparatus at the third stage, the organic aqueous solution is preheated in a preheater. Meanwhile, as another configuration, a system can be employed in which the organic aqueous solution from the outlet of the dehydrating apparatus at the third stage is returned as the recycled organic aqueous solution to the dehydrating apparatus at the third stage. In this case, the recycled aqueous solution is preheated in a preheater upstream of the dehydrating apparatus at the third stage. Then, the organic aqueous solution is preheated also in a preheater upstream of the dehydrating apparatus at the fourth stage.
Likewise, for a dehydrating system including dehydrating apparatuses of five or more stages, a dehydrating system can be employed which is provided with returning means for performing the returning from a dehydrating apparatus at any stage at or before the fourth stage to a dehydrating apparatus at any stage which is at or before the fourth stage but at or after the second stage.

According to the third embodiment, the recycled organic aqueous solution having passed through the dehydrating apparatus 3b at the second stage is returned to an upstream location of the dehydrating apparatus 3b at the second stage. Thereby, the dehydration efficiency can be improved.

Fig. 7 shows a fourth embodiment of the dehydrating system according to the present invention.
The dehydrating system shown in Fig. 7 includes, as main components: one dehydrating apparatus 1d; a raw material pump 2; one preheater 3; a cooling unit 4; and returning means 6c including a recycle pump 5.

The dehydrating system according to this embodiment differs from the dehydrating systems of the first to third embodiments in that only one dehydrating apparatus is provided, so dehydrating apparatuses of multiple stages are not provided. The dehydrating apparatus 1d used in this embodiment is a large dehydrating apparatus in comparison with the dehydrating apparatuses used in the first to third embodiments. Here, the large dehydrating apparatus refers to a dehydrating apparatus having a membrane length which is equivalent to that of normally used dehydrating apparatuses of approximately 10 stages to 20 stages which are connected in series.

The returning means 6c is branched at a downstream location of the dehydrating apparatus 1d, and connected between the raw material pump 2 and the preheater 3. Since the raw material pump 2, the preheater 3, the cooling unit 4 and the recycle pump 5 are similar to those in the other embodiments, the description thereof is omitted.

Next, a dehydrating method of the fourth embodiment is a dehydrating method including a water separation step of flowing a preheated organic aqueous solution from an inlet at a lower portion to an outlet at an upper portion of a water separation membrane having one or more vertically extending flow paths which allow the organic aqueous solution to pass therethrough, and reducing a pressure outside the water separation membrane, thereby causing water in the organic aqueous solution to permeate through the water separation membrane. The dehydrating method includes the steps of: mixing an untreated organic aqueous solution with at least a part of the organic aqueous solution which has undergone the water separation step once; preheating the mixed organic aqueous solution; and subjecting the preheated organic aqueous solution again to the water separation step.

An organic aqueous solution 50 which is a raw material is mixed with a recycled organic aqueous solution 53, and then heated in the preheater 3, to be fed to the dehydrating apparatus 1d. The mixing ratio of the organic aqueous solution 50 which is the raw material to the recycled organic aqueous solution 53 is determined on the basis of the recycle ratio. The recycle ratio can be determined as appropriate by one skilled in the art on the basis of the desired concentration of a product 52, the temperature of the organic aqueous solution at an outlet of the dehydrating apparatus 1d and the overall energy efficiency. For example, the recycle ratio can be 1 to 5, but is not limited thereto. A mixed organic aqueous solution 54 is fed to the dehydrating apparatus 1d, where dehydration is performed. A part of the organic aqueous solution discharged from the dehydrating apparatus is cooled to form a product 52. The remainder is returned as the recycled organic aqueous solution 53 to an upstream location of the preheater 3 by the returning means 6c.

In this embodiment, by the returning means 6c, the recycled organic aqueous solution 53 is mixed with the organic aqueous solution 50 which is the raw material. Thereby, the amount of heat which can be supplied to the dehydrating apparatus 1d becomes larger. For this reason, even when a large dehydrating apparatus is used, the latent heat at the time of water separation is small relative to the amount of heat supplied. Thus, the temperature decrease at the downstream location of the water separation membrane can be prevented. In other words, by the recycling of the organic aqueous solution, the amount of heat supplied to the dehydrating apparatus is made sufficiently larger than the latent heat of vaporization due to the water separation. Thereby, the dehydrating apparatus itself can be made larger.

According to the fourth embodiment, by replacing the dehydrating apparatus provided in multiple numbers with one large dehydrating apparatus, it is possible to obtain an effect of enabling simplification of the piping, and elimination of apparatuses such as a heat exchanger.

## Claims

1. A dehydrating system comprising:
a first preheater;
a plurality of dehydrating apparatuses which are connected in series downstream of the preheater and which are configured to remove water from an organic aqueous solution, each of the plurality of dehydrating apparatuses including a water separation membrane portion and a shell portion inside a main body of the dehydrating apparatus, the water separation membrane portion having an inlet for the organic aqueous solution and an outlet for the organic aqueous solution at a lower portion and an upper portion, respectively, of a water separation membrane having one or more vertically extending flow paths which allow the organic aqueous solution to pass therethrough, the shell portion being defined by an outside surface of the water separation membrane portion and an inner wall of the main body of the apparatus, water in the organic aqueous solution permeating through the water separation membrane and moving to the shell portion, as the organic aqueous solution rises in the water separation membrane, to thereby dehydrate the organic aqueous solution;
returning means for returning a part of the organic aqueous solution having passed through at least one of the dehydrating apparatuses to any of the at least one dehydrating apparatus and the dehydrating apparatus upstream of the at least one dehydrating apparatus; and
a second preheater for preheating the organic aqueous solution returned by the returning means, before the organic aqueous solution is fed to the dehydrating apparatus.

2. The dehydrating system according to claim 1, wherein
the returning means is means for returning a part of the organic aqueous solution having passed through the dehydrating apparatus at a last stage to the dehydrating apparatus at a first stage, and
the first preheater also serves as the second preheater.

3. The dehydrating system according to claim 1, wherein
the number of the dehydrating apparatuses connected in series is three or more, the returning means is means for returning a part of the organic aqueous solution having passed through the dehydrating apparatus at a last stage to the dehydrating apparatus at or after a first stage, and
the second preheater is placed upstream of the dehydrating apparatus at or after the first stage.

4. The dehydrating system according to claim 1, wherein
the number of the dehydrating apparatuses connected in series is three or more, the returning means is means for returning a part of the organic aqueous solution having passed through the dehydrating apparatus at or before a last stage to the dehydrating apparatus at or after a first stage,
the second preheater is placed upstream of the dehydrating apparatus at or after the first stage, and
the dehydrating apparatus at or before the last stage is located downstream of the dehydrating apparatus at or after the first stage.

5. A dehydrating system comprising:
a preheater for preheating an organic aqueous solution;
a dehydrating apparatus for removing water from the preheated organic aqueous solution, the dehydrating apparatus including a water separation membrane portion and a shell portion inside a main body of the dehydrating apparatus, the water separation membrane portion having an inlet for the organic aqueous solution and an outlet for the organic aqueous solution at a lower portion and an upper portion, respectively, of a water separation membrane having one or more vertically extending flow paths which allow the organic aqueous solution to pass therethrough, the shell portion being defined by an outside surface of the water separation membrane portion and an inner wall of the main body of the apparatus, water in the organic aqueous solution permeating through the water separation membrane and moving to the shell portion, as the organic aqueous solution rises in the water separation membrane, to thereby dehydrate the organic aqueous solution; and
returning means for returning a part of the organic aqueous solution having passed through the dehydrating apparatus to an upstream location of the preheater.

6. A dehydrating method which includes a water separation step of flowing a preheated organic aqueous solution from an inlet at a lower portion to an outlet at an upper portion of a water separation membrane having one or more vertically extending flow paths which allow the organic aqueous solution to pass therethrough, and reducing a pressure outside the water separation membrane, thereby causing water in the organic aqueous solution to permeate through the water separation membrane, the dehydrating method comprising the steps of:
mixing at least a part of the organic aqueous solution which has undergone the water separation step one or more times with any one of an untreated organic aqueous solution and the organic aqueous solution which has undergone the water separation step fewer times than the organic aqueous solution which has undergone the water separation step one or more times;
preheating the mixed organic aqueous solution; and
subjecting the preheated organic aqueous solution to the water separation step again.
